# EUROPEAN PATENT SPECIFICATION

(11) **EP 2 011 423 B1**
(45) Date of publication and mention of the grant of the patent: **26.10.2011**
(21) Application number: 08002688.3
(22) Date of filing: 13.02.2008
(51) Int. Cl.: A47J 37/12

(54) **Fryer**
Friteuse
Friteuse

(30) Priority: 02.07.2007 JP 2007174372
(43) Date of publication of application: 07.01.2009
(73) Proprietor: Paloma Co., Ltd., Mizuho-Ku, Nagoya-Shi, Aichi (JP)
(72) Inventor: Hayakawa, Tsuneyasu, Aichi (JP); Kijimoto, Hideki, Aichi (JP)
(74) Representative: Feldmeier, Jürgen

(56) References cited:
- FR-A- 2 214 446
- GB-A- 1 260 297
- GB-A- 191 410 119
- US-A1- 2004 177 767

## Description

### BACKGROUND OF THE INVENTION

### Field of the Invention

The present invention relates to a fryer for cooking foods put in a oil vat which is filled with oil by heating by heating means such as a pulse burner.

### Description of the Background Art

A conventional fryer includes an oil vat for containing cooking oil at an upper part of a housing and heating means such as a pulse burner for heating oil in the oil vat as described in patent documents 1 and 2. In the oil vat, the oil is heated to be at predetermined temperature by heating means and then food is put into the oil.

[Patent Document 1] Japanese Unexamined Patent Publication No. 2002-223953

[Patent Document 2] Japanese Unexamined Patent Publication No. 2002-85268

Patent application FR 73.02302 discloses a fryer having two vats. One of the vats is filled with oil for frying products and the other vat is for collecting fried products. The fryer is provided with a cover which is constituted by two plates which are connected by a hinge. When operating the fryer the cover is in an uprightly folded position and constitutes a shielding for oil spatters. In case of fire inside the oil vat, one of the plates of the cover merely has to be pushed in an closing direction and the cover completely closes by itself because of its weight.

Patent application GB 10119 A A.D. 1914 discloses a cooking range for frying fish and potatoes, having burners, frying pans and racks above the pans and movable covers or curtains for covering the frying pans and racks. When the curtains are pushed back, they give access to the pans and racks. A tunnel is formed through partitions behind the racks in order to carry off steam from the pans.

### SUMMARY OF THE INVENTION

Conventional fryers usually include a fire extinguisher which automatically sprays extinguishing composition so as to extinguish a fire when oil catches a flame because of overheating and the like. However, when the extinguishing composition is used, oil and foods must be discarded and an electric system such as a controller may be damaged and become unusable. Further, as extinguishing composition may be sprayed to facilities around the fryer, these facilities may be damaged.

The present invention has an object to provide a fryer, which can rapidly and accurately extinguish a fire in oil due to overheating.

Further, another object of the present invention is to provide a fryer where the oil after extinguishing a fire can be reused, and extinguishing does not affect facilities around the fryer.

In order to achieve the above-described objects, a first aspect of the present invention is a fryer where a housing includes a shielding member capable of arbitrarily opening/closing an upper face of an oil vat.

In addition to the first aspect of the present invention, a second aspect of the present invention is that the shielding member is configured as a slide cover capable of sliding between an arbitrary housing position where the shielding member is housed to open the upper face of the oil vat and a shielding position to close the upper face of the oil vat, which can save a space.

According to the first aspect of the present invention, fire can be rapidly and accurately extinguished with a shielding member when oil catches a flame. Additionally, as extinguishing composition is not used, oil can be reused after appropriate treatments with the cause of the fire is made. Furthermore, an electric system of the fryer and facilities around the fryer are not affected.

According to the second aspect of the invention, in addition to the first aspect, a shielding member is configured as a sliding cover, and thus a necessary space is reduced.

### BRIEF DESCRIPTION OF THE DRAWINGS

Fig. 1 is a view from a right side face to illustrate a fryer; and
Fig. 2 (A) is a plane view of the fryer and Fig. 2 (B) is a front view of the fryer.

### DESCRIPTION OF THE PREFERRED EMBODIMENTS

An embodiment of the present invention will be described below referring to drawings.

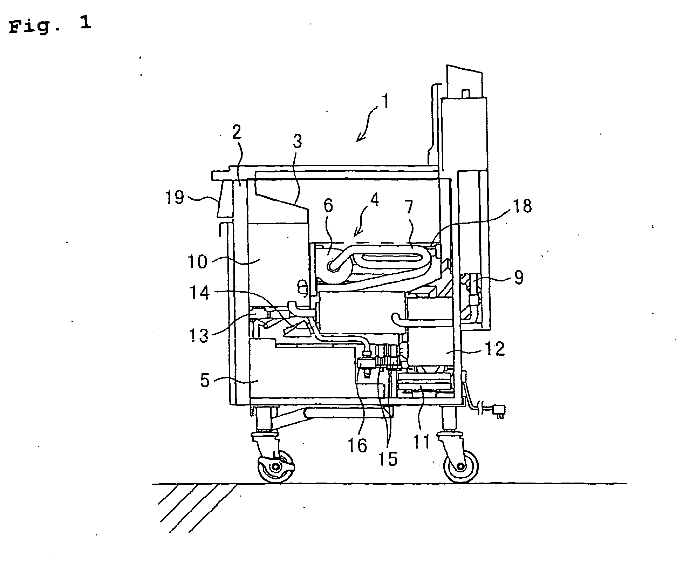

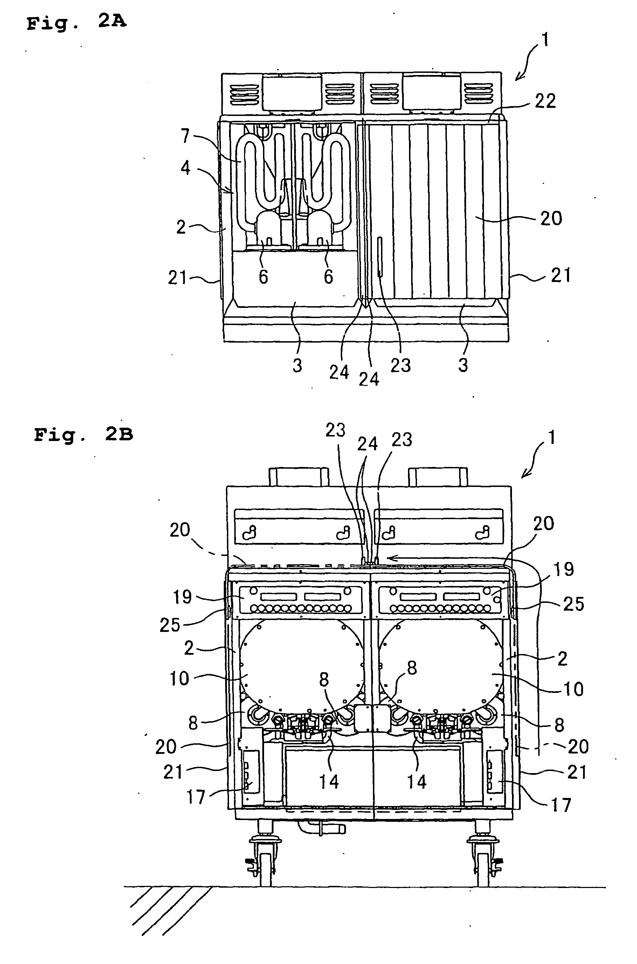

Fig. 1 is a view from the right side face to illustrate an example of a fryer, Fig. 2A is a plane view and Fig. 2B is a front view. A fryer 1 includes a pair of left and right housings 2 and 2. An oil vat 3 to be filled with oil, a pulse burner 4 as heating means for heating oil in each oil vat 3, and an oil cleaner 5 for filtering oil are provided in each housing 2. The each pulse burner 4 has a combustion exhaust system including a combustion chamber 6 provided in the oil vat 3 to carry out a pulse combustion, a tail pipe 7 through which combusted exhaust gas from the combustion chamber 6 is passed, decouplers 8 and 8 connected with a downstream side of the tail pipe 7 and provided on the both sides of the oil vat 3, and an exhaust pipe 9 connected with the downstream side of each decoupler 8 and provided on a back side of the housing 2.

An air chamber 10 is provided at an external part of a front side of each oil vat 3. The air chamber 10 internally includes a mixing chamber which is not illustrated but continued to the combustion chamber 6. The air chamber 10 can supply combustion air from a blower 11, which is provided at a bottom face of the housing 2, through a muffler 12 and an air supply pipe 13. Further, an electromagnetic valves 15 and 15, and a gas governor 16 are provided on a gas conduit pipe 14 connected with the mixing chamber in the air chamber 10. The electromagnetic valves 15 and 15 control opening/closing of a supply passage of fuel gas supplied toward the pulse burner 4, and the gas governor 16 to adjust gas pressure.

Further, a controller 17 is provided at lower part of a front side of each housing 2. The electromagnetic valves 15 and 15 and a temperature sensor 18 provided in the oil vat 3 are connected to the controller 17. The controller 17 can carry out ON/OFF-controlling based on a temperature detecting signal from the temperature sensor 18 so that oil temperature in the oil vat 3 can be kept at a range of cooking temperature (e.g., 180 °C to 182 °C). The ON/OFF-controlling is carried out by opening/closing of the electromagnetic valves 15 and 15 and intermittently combusting mixed gas in the combustion chamber 6. An operation panel 19 is provided at an upper part of a front side of the housing 2 and is used to set a cooking mode and desired temperature which is instructed to input to the controller 17.

Each housing 2 includes a slide cover 20 as a shielding member. The slide covers 20 are symmetrical to right and left and thus will be described using only the right slide cover 20. The slide cover 20 has a flexible shutter shape made by continuously connecting a plurality of a belt shaped plate in a width direction, and is housed in a housing part 21 provided on a side of the housing 2. As illustrated with an arrow in Fig. 2 B, the slide cover 20 can be manually pulled out from a housing position, which is a position indicated by a two-dot chain line in a right side of Fig. 2B, to a shielding position which is indicated by a solid line in the right side of Fig. 2 B along a reverse L-shaped guide rail 22 from the housing part 21 to the upper part of the oil vat 3. The housing position is to house the slide cover 20 in a longitudinal direction toward the inside of the housing part 21, and the shielding position is to approximately close a side upper part of the housing 2 and an upper part of the oil vat 3. Reference numeral 23 shows a handle for a pulling out operation. The slide cover 20 is energized toward the housing position by a spring mechanism (not illustrated) provided in the housing part 21 in a normal state. Further, the slide cover 20 is locked with a lock part 24 provided at a partition part between the oil vats 3 and 3 provided at an upper part of the housing 2, and thus can be kept positioning at the shielding position. An opening/closing detection switch 25 is provided in the housing part 21. The opening/closing detection switch 25 interferences an end edge of the slide cover 20 at the shielding position thereof so as to make ON, and makes OFF at the housing position.

In the fryer 1 with the above-described configuration, when oil is filled in the oil vat 3 and cooking in a desired cooking mode is instructed through the operation panel 19, in a state that the slide cover 20 is at the housing position and the upper part of the oil vat 3 is opened, the controller 17 combusts mixed gas in the combustion chamber 6 so as to operate the pulse burner 4. Then the oil is heated up to a cooking temperature, and the cooking temperature is kept by ON/OFF-controlling the pulse burner 4. Thereafter, foods are put into the oil vat 3 using a basket so as to be cooked by oil at high temperature. The combustion exhaust gas generated in the combustion chamber 6 is discharged from the tail pipe 7 toward the decoupler 8 and ejected from the exhaust pipe 9 toward a back side of the each housing 2.

On the other hand, when oil is overheated because the amount of oil is reduced or foods are not put into the oil and oil catches a flame during cooking, the slide cover 20 of the oil vat 3 on a fire side is pulled out toward the shielding position and locked with the lock member 24 so as to close the upper part of the oil vat 3. At the same time, the pulse burner 4 is stopped combusting as an emergency measure by an operation of the operation panel 19. Since flowing air into the oil vat 3 is prevented, the fire can be automatically extinguished in a short time that is approximately 30 seconds to one minute. After extinguishing, the slide cover 20 is returned to the housing position and the upper part of the oil vat 3 is opened.

According to the above-described fryer 1, since the housing 2 includes the slide cover 20 capable of arbitrarily opening/closing the upper face of the oil vat 3, fire of the oil can be rapidly and accurately extinguished. Further, as extinguishing composition is not used, oil can be reused with appropriate treatments with a cause of catching a fire after extinguishing the fire, and an electric system of the fryer or facilities around the fryer are not affected.

Further, since the slide cover 20 is used as a shielding member, a necessary space is reduced.

In addition, the slide cover can be made of metal and also a fire-retardant synthetic resin or fabric. Further, the slide cover can be housed in a housing part in a longitudinal direction using a spring mechanism and also utilizing a publicly known rolling mechanism using a roll. In this case, when a rolling mechanism is not provided at a side lower part of the housing but provided at a side upper end of the housing, the slide cover can be rapidly pulled out and housed in a short time.

Further, in the above-described embodiment, the pulling out operation is made in the left and right directions. However, the slide cover can be provided at the end edge on the backside of the oil vat together with a rolling mechanism so as to close the upper face of the oil vat by pulling out the slide cover toward the front side. However, in this case, an operation part which is a handle or an operation rod of the slide cover is desirably provided closing to a side face of the housing so as not to cross hands on the oil vat.

In addition, a non-contact sensor can be used to detect opening/closing of the slide cover.

In the above-described embodiment, shielding using the slide cover is carried out by a manual operation of cooking person at the time of catching a fire. However, shielding can be automatically carried out in order to increase safety. For example, a rolling mechanism including a motor may be provided at a front or rear end in a taking in and out direction of the slide cover. When a temperature sensor detects that the oil catches a fire, a motor is driven so as to automatically slide the slide cover to the shielding position. Further, the motor can be driven by button operation or the like on the operation panel so as to carry out shielding.

Further, the shielding member is not limited to the slide cover. For example, a plate can be used as a cover to be configured where the plate is screwed to one end of edge by a hinge capable of opening and closing an opening of the upper part of the housing and, the shielding plate is normally in a hanging state along the side face of the housing, and when oil catches a fire, the shielding plate is rotated so as to close the opening of the upper part of the housing. Thus, the shielding member may be suitably changed in many types without limiting to the above-described embodiments.

In addition, the heating means is not limited to the pulse burner. As the heating means, a gas burner can be used. Further, a fryer not having a pair of an oil vat but having a single oil vat can be used in the present invention.

Further, the shielding member is not limited in using only at the time of catching a fire. While waiting next cooking, the shielding member can be used to cover the upper face of the oil vat and a radiation amount of oil can be suppressed so as to prevent the temperature from dropping. Thus, when the shielding member is used at the time during heat retaining, it is not necessary to use the heating means frequently, which improves energy saving effects.

## Claims

1. A fryer (1) provided with an oil vat (3) to be filled with oil at an upper part in a housing (2) and heating means (4) for heating the oil in the oil vat **characterized in that**
a shielding member capable of arbitrarily opening/closing an upper face of the oil vat (3) is provided in the housing (2), the shielding member being housed in a housing part (21) provided on a side of the housing (2).

2. The fryer according to claim 1, wherein the shielding member is a slide cover (20) capable of sliding between an arbitrary housing position where the shielding member is housed to open the upper face of the oil vat (3) and a shielding position to close the upper face of the oil vat (3).

## Patentansprüche

1. Friteuse (1), die an einem oberen Teil in einem Gehäuse (2) mit einer mit Öl zu füllenden Ölwanne (3), und einem Heizmittel (4) zum Erhitzen des Öls in der Ölwanne versehen ist, **dadurch gekennzeichnet, dass**
ein Abschirmelement, das in der Lage ist, eine obere Fläche der Ölwanne (3) beliebig zu öffnen/schließen, in dem Gehäuse (2) vorgesehen ist,
wobei das Abschirmelement in einem Gehäuseteil (21), das auf einer Seite des Gehäuses (2) vorgesehen ist, untergebracht ist.

2. Friteuse gemäß Anspruch 1, wobei das Abschirmelement eine Schiebeabdeckung (20) ist, die zwischen einer beliebigen Unterbringungsposition, in der das Abschirmelement untergebracht ist, um die obere Fläche der Ölwanne (3) zu öffnen, und einer Abschirmposition, um die obere Fläche der Ölwanne (3) zu schließen, schiebbar ist.

## Revendications

1. Friteuse (1) dotée d'une cuve d'huile (3) destinée à être remplie avec de l'huile au niveau d'une partie supérieure dans un logement (2) et des moyens de chauffage (4) pour chauffer l'huile dans la cuve d'huile, **caractérisée en ce que** :
un élément de protection pouvant arbitrairement ouvrir / fermer une face supérieure de la cuve d'huile (3) est prévu dans le logement (2), l'élément de protection étant logé dans une partie de logement (21) prévue sur un côté du logement (2).

2. Friteuse selon la revendication 1, dans laquelle l'élément de protection est un couvercle coulissant (20) pouvant coulisser entre une position de logement arbitraire dans laquelle l'élément de protection est logé pour ouvrir la face supérieure de la cuve d'huile (3) et une position de protection pour fermer la face supérieure de la cuve d'huile (3).
